# EUROPEAN PATENT SPECIFICATION

(11) **EP 3 859 684 B1**
(45) Date of publication and mention of the grant of the patent: **25.11.2026**
(21) Application number: 20154742.9
(22) Date of filing: 30.01.2020
(51) Int. Cl.: G06T 15/50, G06T 15/06, G06T 7/00

(54) **METHOD AND SYSTEM FOR BUILDING A LIGHTING ADAPTABLE MAP OF AN INDOOR SCENE AND USING IT FOR ESTIMATING AN UNKNOWN LIGHT SETTING**
VERFAHREN UND SYSTEM ZUR ERSTELLUNG EINER AN DIE BELEUCHTUNG ANPASSBAREN KARTE EINER INNENSZENE UND DEREN VERWENDUNG ZUR SCHÄTZUNG EINER UNBEKANNTEN LICHTEINSTELLUNG
PROCÉDÉ ET SYSTÈME POUR CRÉER UNE CARTE ADAPTABLE À L'ÉCLAIRAGE D'UNE SCÈNE INTÉRIEURE ET L'UTILISER POUR ESTIMER UN RÉGLAGE DE LUMIÈRE INCONNU

(43) Date of publication of application: 04.08.2021
(73) Proprietor: TOYOTA JIDOSHA KABUSHIKI KAISHA, Toyota-shi, Aichi-ken, 471-8571 (JP); Albert-Ludwigs-Universität Freiburg, 79098 Freiburg (DE)
(72) Inventor: SUNDRAM, Jugesh, 1140 BRUSSELS (BE); VAN LOOCK, Mark, 1140 BRUSSELS (BE); CASELITZ, Tim, 79098 FREIBURG (DE); KRAWEZ, Michael, 79098 FREIBURG (DE); BURGARD, Wolfram, 79098 FREIBURG (DE)
(74) Representative: Cabinet Beau de Loménie

(56) References cited:
- KEVIN KARSCH ET AL: "Automatic Scene Inference for 3D Object Compositing", ACM TRANSACTIONS ON GRAPHICS, ACM, NY, US, vol. 33, no. 3, 2 June 2014 (2014-06-02), pages 1 - 15, XP058052139, ISSN: 0730-0301, DOI: 10.1145/2602146
- KRAWEZ MICHAEL ET AL: "Building Dense Reflectance Maps of Indoor Environments Using an RGB-D Camera", 2018 IEEE/RSJ INTERNATIONAL CONFERENCE ON INTELLIGENT ROBOTS AND SYSTEMS (IROS), IEEE, 1 October 2018 (2018-10-01), pages 3210 - 3217, XP033491392, DOI: 10.1109/IROS.2018.8594107
- EDWARD ZHANG ET AL: "Emptying, refurnishing, and relighting indoor spaces", ACM TRANSACTIONS ON GRAPHICS, ACM, NY, US, vol. 35, no. 6, 11 November 2016 (2016-11-11), pages 1 - 14, XP058306394, ISSN: 0730-0301, DOI: 10.1145/2980179.2982432

## Description

### FIELD OF THE DISCLOSURE

The present disclosure is related to the field of image processing, in particular to a method and system of estimating a light setting of an indoor scene which comprises one or several switchable light sources. The light setting is thereby defined by the state of each light source in the scene, e.g. whether it is switched on or off.

### BACKGROUND OF THE DISCLOSURE

Cameras are a popular sensor for egomotion estimation in various applications including autonomous driving, virtual reality, and service robotics. Like the latter two, many of these applications target indoor environments where the lighting conditions can change rapidly, e.g., when lights are switched on or off. In contrast to methods that use other modalities or actively project light into the scene (commonly operating in the infrared spectrum), egomotion estimation using passive cameras is directly affected by lighting changes in the visible spectrum as they can have a significant impact on the resulting observation. How crucial this impact is for camera tracking in a map depends on the image gradients that lighting introduces in comparison to the gradients caused by changes in reflectance.

In highly textured parts of the environment, i.e., areas with frequently changing reflectance, the multitude of reflectance gradients might dominate those caused by lighting. In contrast, shadows cast onto a texture-less areas like the floor or walls may introduce the only and thus extremely valuable gradients (features). This even remains true for RGB-D cameras that can additionally rely on active depth measurements, as the mentioned areas are often not only texture-less but do not provide enough geometric features either, e.g., floors and walls with uniform carpets or paintings. Especially in such environments, lighting can provide valuable information that is desired to be exploited for visual localization.

Tracking the pose of a camera is at the core of visual localization methods used in robotics and many other applications. As the observations of a camera are inherently affected by lighting, it has always been a challenge to cope with varying lighting conditions. Thus far, this problem has mainly been approached with the intent of increasing robustness by choosing representations that are invariant to changes in lighting conditions, cf. e.g.: M. Krawez, T. Caselitz, D. Büscher, M. Van Loock, and W. Burgard, "Building dense reflectance maps of indoor environments using an rgb-d camera," in 2018 IEEE/RSJ International Conference on Intelligent Robots and Systems (IROS). IEEE, 2018, pp. 3210-3217.

Methods for visual localization typically aim to achieve robustness by relying on representations that target invariance to lighting conditions. An example are feature descriptors like SIFT (cf. D. G. Lowe, "Distinctive image features from scale-invariant key-points," International journal of computer vision, vol. 60, no. 2, pp. 91-110, 2004) or ORB (cf. E. Rublee, V. Rabaud, K. Konolige, and G. R. Bradski, "Orb: An efficient alternative to sift or surf." in ICCV, vol. 11, no. 1. Citeseer, 2011, p. 2). SIFT and ORB perform brightness normalization, which unfortunately only yields robustness to moderate illumination changes. Matching quality of most standard descriptors decreases in scenes with high temporal lighting variations.

Instead of targeting lighting invariance, another idea is to store multiple appearances that are observed. Churchill and Newman present a visual localization approach which maintains multiple feature maps of the same location for different scene appearances, cf.:
W. Churchill and P. Newman, "Experience-based navigation for long-term localisation," The International Journal of Robotics Research, vol. 32, no. 14, pp. 1645-1661, 2013.

Deep learning based methods have shown to achieve robustness to lighting changes given a sufficient variance in the training data and have been employed for relocalization purposes, cf.:
A. Kendall, M. Grimes, and R. Cipolla, "Posenet: A convolutional network for real-time 6-dof camera relocalization," in Proceedings of the IEEE international conference on computer vision, 2015, pp. 2938-2946.

Mashita et al. associate key points in the scene with a distribution over feature vectors, which represents the key point appearance under various lighting conditions, cf.:
T. Mashita, A. Plopski, A. Kudo, T. Höllerer, K. Kiyokawa, and H. Takemura, "Camera localization under a variable lighting environment using parametric feature database based on lighting simulation," Transactions of the Virtual Reality Society of Japan, vol. 22, no. 2, pp. 177-187, 2017.
The distribution parameters are computed by rendering a 3D model of the scene with different illumination settings.

Features relying on strong gradients have also been found not to work as well for visual localization (or odometry) for low textured regions where direct approaches perform better. At the same time they are more sensitive to illumination changes as they directly work on image intensities. To address this issue, Clement and Kelly propose to transform input images into a canonical representation with an encoder-decoder network before tracking them against a keyframe map, cf.:
L. Clement and J. Kelly, "How to train a cat: learning canonical appearance transformations for direct visual localization under illumination change," IEEE Robotics and Automation Letters, vol. 3, no. 3, pp. 2447-2454, 2018.
The network re-illuminates the images to the lighting setting present during map construction.

Zhang et al. recover the geometry and diffuse reflectance of an indoor environment from RGB-D video and further fit light source models into the scene which are then used for relighting, cf.:
E. Zhang, M. F. Cohen, and B. Curless, "Emptying, refurnishing, and relighting indoor spaces," ACM Transactions on Graphics (TOG), vol. 35, no. 6, 2016.

In a recent approach Azinović et al. recover the bidirectional reflectance distribution function (BRDF) and light source parameters of an indoor 3D model using stochastic gradient descent optimization, cf.:
D. Azinovic, T.-M. Li, A. Kaplanyan, and M. NieBner, "Inverse path tracing for joint material and lighting estimation," arXiv preprint arXiv:1903.07145, 2019.
Besides, Karsch et al. proposed a method for compositing 3D objects by automatic scene inference, based on a single photograph, cf.:
Karsch, K., Sunkavalli, K., Hadap, S., Carr, N., Jin, H., Fonte, R., Sittig, M., & Forsyth, D. (2014). Automatic scene inference for 3D object compositing. ACM Transactions on Graphics, 33(3), [32]. https://doi.org/10.1145/2602146

### SUMMARY OF THE DISCLOSURE

Currently, it remains desirable to overcome the aforementioned problems and in particular to provide a corresponding method and system for building a lighting adaptable map (e.g. a virtual model) of an indoor scene which is able to adapt its (radiance) appearance based on any given light setting. Furthermore it remains desirable to estimate a light setting of an indoor scene, which is e.g. suitable for camera localization under changing lighting conditions. The present invention is defined by the appended independent claims.

Therefore, according to the embodiments of the present disclosure, a computer implemented method for building a lighting adaptable map of an indoor scene (e.g. 3D map of the indoor scene, e.g. a mesh) is provided. The lighting adaptable map adapts its (radiance) appearance based on a given light setting (i.e. the lighting adaptable map can adapt its (radiance) appearance to any given light setting), wherein the light setting is defined by the state of each light source. The method comprises the steps of:
- obtaining first image information of the scene, where all light sources are turned on,
- estimating a map of the scene based on said first image information, said map comprising radiance information and light reflecting characteristics of the surfaces in the scene,
- detecting and segmenting individual light sources in the scene based on the estimated map,
- estimating the radiance contribution of each light source to the scene based on the estimated map, and

building the lighting adaptable map by storing the estimated radiance contributions and combining them for any given light setting;
wherein the method further comprising the step of estimating an unknown light setting in the scene, by the steps of:
   ∘ obtaining second image information of the scene under the unknown light setting, and
   ∘ estimating the unknown light setting by comparing the second image information with at least one adapted appearance of the lighting adaptable map.

By providing such a method, lighting effects can be explicitly exploited for e.g. camera tracking.
Furthermore, by providing such a method, the need of reflectance estimation on the input image can be avoided by applying the lighting on the reflectance map. Moreover, as it is the goal to explicitly exploit the effects of lighting, there is no need to cancel them out.

The map obtained from the first image information may also be referred to as radiosity (i.e. radiance) and/or reflectance map. Estimating said map may be done, as e.g. described in M. Krawez et al. as cited above.

Based on reflectance maps (as e.g. described in M. Krawez et al. as cited above) a lighting adaptable map representation for indoor environments is proposed that allows to render the scene illuminated by an arbitrary subset of the light sources (e.g. lamps) contained in the model. Being able to automatically detect the light setting from the current observation enables to match it against the correspondingly adjusted map. As a result, cast shadows do no longer act as disturbances but rather as beneficial features that can directly be exploited by the method of the present disclosure. In particular, capabilities of said method can be leveraged in a direct dense camera tracking approach.

In the present disclosure the term visual localization is advantageously used to describe the task of using images to estimate the camera pose w.r.t. an entire map that has been previously built. This is in contrast to visual odometry that only uses the most recent frame(s) as the reference. Visual localization contains the subtasks of finding a coarse global estimate, often called global localization or relocalization, and the subtask of tracking which is to accurately estimate the camera pose over time given an initial estimate. However, the map representation of the present disclosure may not only be used to increase camera tracking performance but may also be beneficial for e.g. relocalization purposes.

Advantageously the map representation of the present disclosure may build up on the work of described in M. Krawez et al. as cited above in which a method is presented to build reflectance maps of indoor environments. In the method of present disclosure this representation may be extended to so-called lighting adaptable maps, which, in addition to the surface reflectance model, contain the global contributions of the light emitters (lamps) present in the scene. The model parameters allow to switch the contributions of individual lamps on and off. While these parameters could be provided by an external system (e.g., home automation), in the method of the present disclosure they may be estimated from a single camera image. Representing the effects of global lighting in the map can subsequently be exploited when matching against real world observations.

The estimated map obtained from first image information may comprise a three dimensional surface model representing the geometry of the scene.

The step of estimating the radiance contributions may comprise a step of ray tracing in the scene based on the estimated map obtained from first image information.

The present invention relates to a computer-implemented method of estimating an unknown light setting, where the state of at least one light source is unknown.

Accordingly, an unknown light setting can be estimated and e.g. simulated by the lighting adaptable map, what may be useful for further applications, as described in the following.

The state of a light source may be represented by variables indicating the lightness and/or chroma and/or hue of a light source.
For example, the state of a light source may simply indicate whether the light source is switched on or off.

Estimating the unknown light setting may comprise the steps of:
i. simulating radiance image information for possible light settings based on the lighting adaptable map,
ii. obtaining real radiance image information based on the second image information,
iii. determining a predefined metric by comparing the real and the simulated radiance image information for the possible light settings,
iv. select the light setting that minimizes the predefined metric determined in step iii.

Estimating the unknown light setting may be based on receiving information about the state of at least one light source via a communication interface that transmits said status information

The unknown light setting and/or camera pose tracking may be estimated in real-time or in quasi real time.

Since the estimated radiosity contributions are pre-calculated and stored, in order to build the lighting adaptable map (which is accordingly also pre-calculated and stored), the step of estimating an unknown light setting may be carried out in real-time or in quasi real time.

The present disclosure further relates to a computer implemented method for camera pose tracking, comprising:
- the steps of any one of the preceding methods, and
- a step of tracking a camera pose in the indoor scene as a function of the estimated light setting.

The step of tracking the camera pose may comprise:
- simulating image information based on the estimated light setting,
- obtaining real image information based on the second image information,
- determining a predefined error between simulated and real image information,
- estimating the camera pose by minimizing the error.

The present disclosure further relates to a computer implemented method for augmented reality, comprising:
- the steps of any one of the preceding methods, and
- a step of augmenting the indoor scene with artificial entities according to a predefined method and as a function of the estimated light setting

The present disclosure further relates to a computer implemented method for object recognition, comprising:
- the steps of any one of the preceding methods, and
- a step of recognizing an object in the indoor scene according to a predefined method and as a function of the estimated light setting.

The present disclosure further relates to a system (e.g. for building a lighting adaptable map of an indoor scene), comprising a control unit configured to carry out a method of any one of the preceding methods.

The present disclosure may further relate to a vehicle or a robotic system comprising the system.

The present disclosure may further relate to a computer program including instructions for executing the steps of at least one of the methods described above, when said program is executed by a computer.

Finally, the present disclosure may also relate to a recording medium readable by a computer and having recorded thereon a computer program including instructions for executing the steps of at least one of the methods described above, when said program is executed by a computer.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, and serve to explain the principles thereof.

### BRIEF DESCRIPTION OF THE DRAWINGS

Fig. 1 shows a schematic block diagram of a system according to embodiments of the present disclosure;
Fig. 2 shows an example of a method of building a lighting adaptable map of an indoor scene according to embodiments of the present disclosure; and
Fig. 3 shows an example of a method of estimating an unknown light setting according to embodiments of the present disclosure.

### DESCRIPTION OF THE EMBODIMENTS

Reference will now be made in detail to exemplary embodiments of the disclosure, examples of which are illustrated in the accompanying drawings. Wherever possible, the same reference numbers will be used throughout the drawings to refer to the same or like parts.

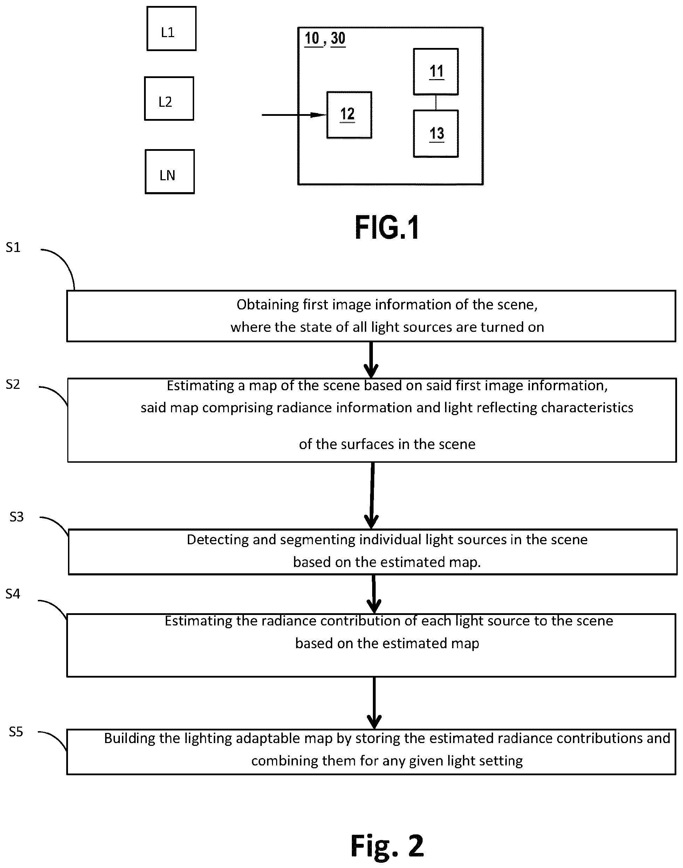

Fig. 1 shows a block diagram of a system 10 according to embodiments of the present disclosure. The system is configured to carry out the method according the present disclosure. In particular, the system may be configured to carry out computer instructions. For example the system may comprise a processor 11 (e.g. at least one CPU and/or GPU) and a memory 13 for executing said instructions. The memory 13 may be a non-volatile memory and it may comprise said instructions (or a computer program), e.g. of the method according the present disclosure, which can be executed by the processor 11 to build a lighting adaptable map and/or to estimate a light setting of an indoor scene.

The system 10 may further comprise an acquisition module 12 configured to acquire images (e.g. one or several cameras, in particular an RGB-D camera).

The system may be part of a robotic system or a vehicle 30. In other words, the system, in particular its acquisition module 12 may be configured to autonomously move.

Generally spoken, the system is configured to build a lighting adaptable map and/or to estimate a light setting of an indoor scene which comprises one or several switchable light sources L1, L2, ... , LN and one or several surfaces. The lighting adaptable map thereby adapts its appearance based on a give light setting. The light setting is defined by the state of each light source in the scene, e.g. whether it is switched on or off or any state in between (e.g. in case of a continuously or discretely dimmable light source). In particular, the present disclosure proposes a method to exploit lighting effects for e.g. camera tracking in indoor environments. Additionally, at least one of the light sources may comprise a data interface (e.g. may be an internet-of-things device), which may be used by the system to obtain the current light setting of said light source.

Fig. 2 shows an example of a method for building a lighting adaptable map according to embodiments of the present disclosure. The method carried out by the system can be summarized as follows:

In a step S1 the system obtains through the camera 12 first image information of the scene, where the actual state of all light sources are turned on.

Subsequently, in a step S2 a (radiosity and reflectance) map of the scene is estimated based on said first image information, said map comprising radiance information and light reflecting characteristics of the surfaces in the scene, as it is described e.g. in M. Krawez et al., as cited above).

Subsequently, in a step S3 the system detects and segments individual light sources L1, L2, ... , LN in the scene based on the estimated radiosity map.

Subsequently, in a step S4 the system estimates the radiance contribution of each light source to the scene based on the estimated map.

Subsequently, in a step S5 the system builds the lighting adaptable map by storing the estimated radiance contributions and combining them for any given light setting.

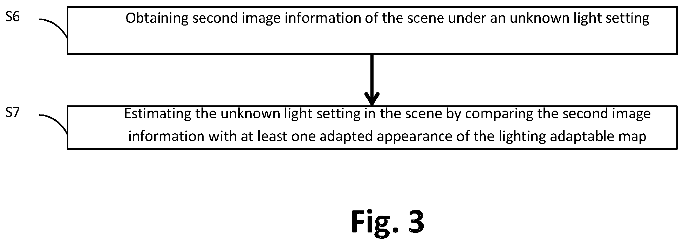

Fig. 3 shows an example of a method for estimating an unknown light setting in an indoor scene according to embodiments of the present disclosure. Said method desirably uses a lighting adaptable map built for said indoor scene, as described above in context of fig. 2. The currently given, actual light setting is known because the state of at least one light source is unknown.

In step S6 the system obtains via the camera 12 second image information of the scene during the unknown light setting, i.e. where the state of at least one or all light sources is unknown. This state is unknown, as the respective light setting of the light sources in the indoor scene is unknown and to be estimated by the system.

Subsequently, in a step S7 the system estimates the current light setting by comparing the second image information with at least one or all of the adapted appearances of the lighting adaptable map. Said adapted appearances are corresponding to different light settings, which have been virtually modeled by the lighting adaptable map. Desirably, it is estimated that the (virtually modeled) appearance, which is closest to the second image information, represents the real unknown light setting.

It is noted that "estimating" means advantageously in the present context that the system determines or calculates the respective parameters, wherein however the determined or calculated result may be not always correct, i.e. only an "estimation".

In the following advantageous embodiments of the single steps of the method are described in more detail. The three main contributions are described in the following subsections. First, the lighting adaptable map representation (steps S2 to S5) is described based on the previous work of M. Krawez et al., as cited above, on reflectance maps. Second, the method is described to estimate the present light setting in the scene from the current camera observation (steps S6-S7). Third, it is described how these components may be leveraged to exploit lighting effects in e.g. a direct dense camera tracking approach (optional further step).

### Lighting Adaptable Maps (steps S2 to S5)

As the present method may be built upon the previous work of M. Krawez et al., as cited above, the main ideas and notation are only briefly recapped here, in order to give an example of a possible embodiment of step S2. The geometry is represented as a 3D mesh, consisting of a set of vertices *vᵢ* and triangle primitives, where a triangle connects three vertices. Each vertex is associated with a radiosity *B*(*vᵢ*), an irradiance *H*(*vᵢ*), and its diffuse reflectance *ρ*(*vᵢ*) *= B*(*vᵢ*)/*H*(*vᵢ*). These quantities are set in relation via the radiosity equation : $B \left({v}_{i}\right) = ρ \left({v}_{i}\right) H \left({v}_{i}\right) = ρ \left({v}_{i}\right) {\sum }_{j \neq i} B \left({v}_{j}\right) F \left({v}_{i}, {v}_{j}\right) G \left({v}_{i}, {v}_{j}\right)$ (1) where *F*(*vᵢ, vⱼ*) is the form factor describing the geometrical relationship between *vᵢ* and *vⱼ*, and *G*(*vᵢ, vⱼ*) ∈ {0,1} being 1 if the line of sight between *vᵢ* and *vⱼ* is not blocked.

It is proposed to employ the reflectance map to predict the scene appearance, i.e., radiosity, for light settings which have not been directly observed during data acquisition (cf. steps S3, S4). It is assumed that the scene contains L light sources which can be switched on and off individually. Further, it is expected a static geometry and in particular that the light source positions do not change.

To detect the light emitters the same method as in M. Krawez et al. (as cited above) is employed, which essentially performs a clustering on vertices with high radiosity values. Thus, a light emitter must be directly observed in switched-on state to be detected. Each detected light source is indexed uniquely, where the set of all indices is 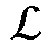 *=* {0,1, ..., *L -* 1}*.* A *light setting* 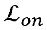 ⊆ 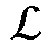 is the set of all light sources switched on at the same time. *Vₗ* is the set of all vertices belonging to the light source *l*.

The goal is to estimate the radiosity 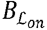 (*vᵢ*) for any light setting 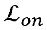 *.* The linearity of the radiosity equation is exploited to precompute the illumination contributions of individual light emitters and to later compose them in real-time: ${\hat{B}}_{{L}_{on} \left({v}_{i}\right)} = {\sum }_{l ∈ {L}_{on}} {\hat{B}}_{l} \left({v}_{i}\right)$ (2) where *B̂ₗ* is the estimated radiosity component of light source *l.* To compute *B̂ₗ* the reflectance values are plugged into Equation 1 and solve it for radiosities, using lamp radiosities as the initial condition. Although in theory it is possible to solve the resulting equation system analytically, it is not feasible in practice due to the typically large number of vertices. Instead, an approximate solution is foound by iteratively evaluating Equation 1: ${\hat{B}}_{l}^{k + 1} \left({v}_{i}\right) = ρ \left({v}_{i}\right) {\sum }_{j \neq i} {\hat{B}}_{l}^{k} \left({v}_{j}\right) F \left({v}_{i}, {v}_{j}\right) G \left({v}_{i}, {v}_{j}\right)$ (3) where ${\hat{B}}_{l}^{k}$ is the radiosity after *k* iterations.

For *k =* 0 it is initialized the radiosity of vertices on lamp *l* with the measured radiosity, for all other vertices it is set to zero: ${\hat{B}}_{l}^{0} \left({v}_{i}\right) = \left\{\begin{matrix}B \left({v}_{i}\right) & {v}_{i} ∈ {V}_{l} \\ 0 & otherwise\end{matrix}\right.$ For example, the number of iterations may be *K* = 10 and it may be set ${\hat{B}}_{l} = {\hat{B}}_{l}^{K}$.

In order to point out the benefits of the map representation, a naive approach is considered to illumination-adjustable maps, which simply creates a new radiosity map for each newly encountered light setting. For *L* light sources, that would require to store 2*^{L}* radiosity values for each vertex, and at least 2*^{L}* mapping runs would be needed. In contrast, only *L* radiosity components are stored per vertex, and in best case need only one mapping run to discover all lamps.

### Light Setting Estimation (steps S6-S7)

As previously described, a lighting adaptable map is a parametric model that represents the appearances of a scene illuminated by an arbitrary subset of lamps contained in the environment. In order to compare observations of the real world to the adaptable model, its parameters need to be set correspondingly, i.e., it is required to determine whether lamps are switched on or off in reality. In the following it is proposed an approach to estimate these parameters, called the light setting, by using e.g. a single camera image only.

As all parameters of the model are binary variables, a light setting 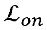 can also be expressed as a vector *x* ∈ {0,1}*^{L}* with: ${x}_{i} = \left\{\begin{matrix}1 & i ∈ {L}_{on} \\ 0 & otherwise\end{matrix}\right.$

In order to find the *x* that best fits the currently observed color image *I_{C}* it is desirable to leverage the superposition shown in equation 2 and thus transform *I_{C}* to its corresponding radiosity image *I_{B}* = *f*⁻¹(*I_{C}*)/(*et* * *g*) using the inverse camera response function *f*⁻¹ as well as the exposure time *et* and the gain *g* used to capture the image. Given the current camera pose estimate, it can be obtained a rendering of the map *Î_{B̂}_{ₓ}* illuminated by an arbitrary light setting *x* and compared with the real image *I_{B}.* More specifically, the light setting *x* is found that minimizes the sum of squared errors between the measured radiosity *B* and its predicted counterpart *B̂* from the map normalized on the map reflectance *ρ* over all pixels *u* in the image domain Ω: $x * = {arg min}_{x} {\sum }_{u ∈ Ω} {\left‖\left({I}_{B}\left(u\right)-{\hat{I}}_{{\hat{B}}_{x}}\left(u\right)\right){\hat{I}}_{ρ}\right‖}_{2}$ (2)

The error for a specific *x* can be written as ${e}_{x} = {x}^{T} {A}^{T} Ax - 2 {x}^{T} {A}^{T} b + {b}^{T} b$ (5) $A = \left[stack\left({\hat{I}}_{{\hat{B}}_{0}}\right)…stack\left({\hat{I}}_{{\hat{B}}_{L - 1}}\right)\right] ∗ w$ (6) $b = stack \left({I}_{B}\right) ∗ w$ (7) $w = 1 / stack \left({\hat{I}}_{ρ}\right)$ (8) where the stack() operator stacks all image pixels, in this case for each color channel, into a vector. The weight multiplication of w is meant row-wise, the devision component-wise. For example, the components *A^{T}A* (*L* × *L*), *A^{T}b* (*L* × 1), and *b^{T}b* (1 × 1) are efficiently built in parallel on a GPU of the system and only the evaluation of *eₓ* is performed on a CPU of the system. As this evaluation is extremely fast (approximately 1ns), it can be afforded to solve Equation 4 brute-force. For up to L=20 lamps (2^{L} ≈ 10⁶) the required computation time is less than 1ms and dominated by the time needed to build the components.

### Camera Tracking (optional step)

The method of the present disclosure may be used to do camera tracking. Other applications are though also possible, as e.g. a relocalization application.

Camera tracking is the problem of estimating the camera pose *T* ∈ *SE*(3) for every time *t* the camera provides a frame *Iₜ.* Using the terms from e.g. Newcombe et al., *frame-to-frame* tracking yields an odometry solution prone to drift for the global pose *T*_{*t,*0} *= T*_{*t,t*-1} ... *T*_{1,0}*,* while *frame-to-model* tracking (at least in a previously built model) does not suffer from these effects due to its reference to the global map, cf.:
R. A. Newcombe, S. Izadi, O. Hilliges, D. Molyneaux, D. Kim, A. J. Davison, P. Kohi, J. Shotton, S. Hodges, and A. Fitzgibbon, "KinectFusion: Real-time dense surface mapping and tracking," in IEEE International Symposium on Mixed and Augmented Reality (ISMAR), 2011.

As the names suggest, the former finds *T*_{*t,t*-1} by comparing *Iₜ* to *I*_{*t*-1} whereas the latter compares *Iₜ* to a rendering of the model *Î*. Given two input frames, there is no difference between both, so in the following it is only described the terms for the model tracking as the ones for frame-to-frame tracking can easily be obtained by replacing the rendered quantities with the ones from the last frame.

The direct dense camera tracking approach can work on color (or gray-scale) images only by utilizing the depth from the model to apply projective data association ${u}^{˜} = π \left({KT}_{t , t - 1}\hat{V}\left(u\right)\right)$ where *π* is the perspective projection function, K the camera matrix, and *V̂* the vertex map created using the depth image *Î_{D}* rendered from the model. As proposed by Newcombe et al. (as cited above), the data association optimization loop is embedded in a coarse-to-fine approach using three image pyramid levels.

In case a measured depth image *I_{D}* is provided, its geometric information can be used in addition to the radiometric information contained in the color image *I_{C}*. Their combination is realized as described by Whelan et al., which may also be followed to efficiently solve the pose estimation problem on the GPU, cf.:
T. Whelan, R. F. Salas-Moreno, B. Glocker, A. J. Davison, and S. Leutenegger, "Elasticfusion: Real-time dense slam and light source estimation," The International Journal of Robotics Research, vol. 35, no. 14, pp. 1697-1716, 2016.

The geometric error term ${E}_{G} = {\sum }_{u ∈ Ω} {\left‖{\left({T}_{t - 1 , t}V\left({u}^{˜}\right)-\hat{V}\left(u\right)\right)}^{T}\hat{N}\left(u\right)\right‖}_{2}$ uses a point-to-plane metric. Its Jacobians are left out for brevity here as they can be found in e.g. Newcombe et al. (as cited above). The color error ${E}_{C} = {\sum }_{u ∈ Ω} {\left‖{I}_{C}\left({u}^{˜}\right)-{\hat{I}}_{\hat{C}}\left(u\right)\right‖}_{2}$ uses image warping as described by e.g.:
F. Steinbrücker, J. Sturm, and D. Cremers, "Real-time visual odometry from dense rgb-d images," in 2011 IEEE International Conference on Computer Vision Workshops (ICCV Workshops). IEEE, 2011, pp. 719-722, or
C. Audras, A. Comport, M. Meilland, and P. Rives, "Real-time dense appearance-based slam for rgb-d sensors," in Australasian Conf. on Robotics and Automation, vol. 2, 2011, pp. 2-2.

The core idea to leverage the map representation and light setting estimation for direct dense camera tracking is to adapt the rendering ${\hat{I}}_{\hat{C}} = f \left({\hat{I}}_{{\hat{B}}_{{x}^{∗}}}∗et∗g\right)$ to the lighting conditions present in the scene. A single frame-to-frame tracking step may be used based on the previous global pose estimate to obtain an updated pose for the light setting estimation as well as a refined initial estimate for the frame-to-model tracking.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

## Claims

1. A computer implemented method for building a lighting adaptable map of an indoor scene, the scene comprising at least one light source and at least one surface, wherein the lighting adaptable map adapts its appearance based on a given light setting, wherein the light setting is defined by the state of each light source, comprising the steps of:
• obtaining first image information of the scene, where all light sources are turned on,
• estimating a map of the scene based on said first image information, said map comprising radiance information and light reflecting characteristics of the surfaces in the scene,
• detecting and segmenting individual light sources in the scene based on the estimated map,
• estimating the radiance contribution of each light source to the scene based on the estimated map, and
• building the lighting adaptable map by storing the estimated radiance contributions and combining them for any given light setting;
wherein the method further comprising the step of estimating an unknown light setting in the scene, by the steps of:
∘ obtaining second image information of the scene under the unknown light setting, and
∘ estimating the unknown light setting by comparing the second image information with at least one adapted appearance of the lighting adaptable map.

2. The method according to claim 1, wherein
the estimated map obtained from first image information comprises a three dimensional surface model representing the geometry of the scene.

3. The method according to any one of the preceding claims 1 and 2, wherein the step estimating the radiance contributions comprises a step of ray tracing in the scene based on the estimated map obtained from first image information.

4. The method according to any one of the preceding claims, wherein
the state of a light source is represented by variables indicating the lightness and/or chroma and/or hue of a light source.

5. The method according to any one of the preceding claims, wherein estimating the unknown light setting comprises the steps of:
i. simulating radiance image information for possible light settings based on the lighting adaptable map,
ii. obtaining real radiance image information based on the second image information,
iii. determining a predefined metric by comparing the real and the simulated radiance image information for the possible light settings,
iv. select the light setting that minimizes the predefined metric determined in step iii.

6. The method according to any one of the preceding claims, wherein estimating the unknown light setting is based on receiving information about the state of at least one light source via a communication interface that transmits said status information.

7. A computer implemented method for camera pose tracking, comprising:
• the steps of any one of the preceding claims, and
• a step of tracking a camera pose in the indoor scene as a function of the estimated light setting.

8. The method according to the preceding claim, wherein the step of tracking the camera pose comprises:
• simulating image information based on the estimated light setting,
• obtaining real image information based on the second image information,
• determining a predefined error between simulated and real image information,
• estimating the camera pose by minimizing the error.

9. The method according to any one of the preceding claims, wherein the unknown light setting and/or camera pose tracking is estimated in real-time or in quasi real time.

10. A computer implemented method for augmented reality, comprising:
• the steps of any one of the preceding claims, and
• a step of augmenting the indoor scene with artificial entities according to a predefined method and as a function of the estimated light setting.

11. A computer implemented method for object recognition, comprising:
• the steps of any one of the preceding claims, and
• a step of recognizing an object in the indoor scene according to a predefined method and as a function of the estimated light setting.

12. A system, comprising a control unit configured to carry out a method of any one of the preceding method claims.

13. A computer program including instructions for executing the steps of a method according to any one of the preceding method claims when said program is executed by a computer.

14. A recording medium readable by a computer and having recorded thereon a computer program including instructions for executing the steps of a method according to any one of the preceding method claims.

## Patentansprüche

1. Computerimplementiertes Verfahren zum Erstellen einer beleuchtungsadaptiven Karte einer Innenraumszene, wobei die Szene mindestens eine Lichtquelle und mindestens eine Fläche umfasst, wobei die beleuchtungsadaptive Karte ihr Erscheinungsbild auf Basis einer gegebenen Beleuchtungseinstellung anpasst, wobei die Beleuchtungseinstellung durch den Zustand von jeder Lichtquelle definiert ist, das die folgenden Schritte umfasst:
• Erhalten von ersten Bildinformationen der Szene, wenn alle Lichtquellen eingeschaltet sind,
• Schätzen einer Karte der Szene auf Basis der ersten Bildinformationen, wobei die Karte Strahlungsinformationen und Lichtreflexionseigenschaften der Flächen in der Szene umfasst,
• Detektieren und Segmentieren von einzelnen Lichtquellen in der Szene auf Basis der geschätzten Karte,
• Schätzen des Strahlungsbeitrags von jeder Lichtquelle zur Szene auf Basis der geschätzten Karte, und
• Erstellen einer beleuchtungsadaptiven Karte durch Speichern der geschätzten Strahlungsbeiträge und Kombinieren derselben für eine gegebene Beleuchtungseinstellung;
wobei das Verfahren ferner den Schritt des Schätzens einer unbekannten Beleuchtungseinstellung in der Szene durch die folgenden Schritte umfasst:
∘ Erhalten von zweiten Bildinformationen der Szene unter der unbekannten Beleuchtungseinstellung, und
∘ Schätzen der unbekannten Beleuchtungseinstellung durch Vergleichen der zweiten Bildinformationen mit mindestens einem angepassten Erscheinungsbild der beleuchtungsadaptiven Karte.

2. Verfahren nach Anspruch 1, wobei
die geschätzte Karte, die aus den ersten Bildinformationen erhalten wird, ein dreidimensionales Flächenmodell umfasst, das die Geometrie der Szene repräsentiert.

3. Verfahren nach einem der vorhergehenden Ansprüche 1 und 2, wobei der Schritt des Schätzens der Strahlungsbeiträge einen Schritt des Strahlverfolgens in der Szene auf Basis der geschätzten Karte umfasst, die aus den ersten Bildinformationen erhalten wird.

4. Verfahren nach einem der vorhergehenden Ansprüche, wobei der Zustand einer Lichtquelle durch Variablen repräsentiert wird, die die Helligkeit und/oder der Chrominanz und/oder des Farbtons einer Lichtquelle anzeigen.

5. Verfahren nach einem der vorhergehenden Ansprüche, wobei das Schätzen der unbekannten Beleuchtungseinstellung die folgenden Schritte umfasst:
i. Simulieren von Strahlungsbildinformationen für mögliche Beleuchtungseinstellungen auf Basis der beleuchtungsadaptiven Karte,
ii. Erhalten von realen Strahlungsbildinformationen auf Basis der zweiten Bildinformationen,
iii. Bestimmen einer vordefinierten Metrik durch Vergleichen der realen und der simulierten Strahlungsbildinformationen für die möglichen Beleuchtungseinstellungen,
iv. Auswählen der Beleuchtungseinstellung, die die in Schritt iii. bestimmte vordefinierte Metrik minimiert.

6. Verfahren nach einem der vorhergehenden Ansprüche, wobei das Schätzen der unbekannten Beleuchtungseinstellung auf dem Empfangen von Informationen über den Zustand von mindestens einer Lichtquelle via eine Kommunikationsschnittstelle, die die Statusinformationen überträgt, basiert.

7. Computerimplementiertes Verfahren zur Kamerapositionsverfolgung, das Folgendes umfasst:
• die Schritte nach einem der vorhergehenden Ansprüche, und
• einen Schritt des Verfolgens einer Kameraposition in der Innenraumszene als eine Funktion der geschätzten Beleuchtungseinstellung.

8. Verfahren nach dem vorhergehenden Anspruch, wobei der Schritt des Verfolgens der Kameraposition Folgendes umfasst:
• Simulieren von Bildinformationen auf Basis der geschätzten Beleuchtungseinstellung,
• Erhalten von realen Bildinformationen auf Basis der zweiten Bildinformationen,
• Bestimmen eines vordefinierten Fehlers zwischen den simulierten und den realen Bildinformationen,
• Schätzen der Kameraposition durch Minimieren des Fehlers.

9. Verfahren nach einem der vorhergehenden Ansprüche, wobei die unbekannte Beleuchtungseinstellung und/oder die Kamerapositionsverfolgung in Echtzeit oder in Quasi-Echtzeit geschätzt wird.

10. Computerimplementiertes Verfahren für eine erweiterte Realität, das Folgendes umfasst:
• die Schritte nach einem der vorhergehenden Ansprüche, und
• einen Schritt des Erweiterns der Innenraumszene mit künstlichen Entitäten gemäß einem vordefinierten Verfahren und als eine Funktion der geschätzten Beleuchtungseinstellung.

11. Computerimplementiertes Verfahren für eine Objekterkennung, das Folgendes umfasst:
• die Schritte nach einem der vorhergehenden Ansprüche, und
• einen Schritt des Erkennens eines Objekts in der Innenraumszene gemäß einem vordefinierten Verfahren und als eine Funktion der geschätzten Beleuchtungseinstellung.

12. System, das eine Steuereinheit umfasst, die dazu ausgelegt ist, ein Verfahren nach einem der vorhergehenden Verfahrensansprüche umzusetzen.

13. Computerprogramm, das Anweisungen zum Ausführen der Schritte eines Verfahrens nach einem der vorhergehenden Verfahrensansprüche beinhaltet, wenn das Programm von einem Computer ausgeführt wird.

14. Aufzeichnungsmedium, das von einem Computer lesbar ist und auf dem ein Computerprogramm aufgezeichnet ist, das Anweisungen zum Ausführen der Schritte eines Verfahrens nach einem der vorhergehenden Verfahrensansprüche beinhaltet.

## Revendications

1. Procédé mis en œuvre par ordinateur pour construire une carte adaptable en éclairage d'une scène en intérieur, la scène comprenant au moins une source lumineuse et au moins une surface, dans lequel la carte adaptable en éclairage adapte son apparence sur la base d'un réglage de lumière donné, dans lequel le réglage de lumière est défini par l'état de chaque source lumineuse, comprenant les étapes suivantes :
• obtenir des premières informations d'image de la scène où toutes les sources lumineuses sont allumées,
• estimer une carte de la scène sur la base desdites premières informations d'image, ladite carte comprenant des informations de radiance et des caractéristiques de réflexion de lumière des surfaces dans la scène,
• détecter et segmenter des sources lumineuses individuelles dans la scène sur la base de la carte estimée,
• estimer la contribution de radiance de chaque source lumineuse à la scène sur la base de la carte estimée, et
• construire la carte adaptable en éclairage en stockant les contributions de radiance estimées et en les combinant pour tout réglage de lumière donné ;
dans lequel le procédé comprend en outre l'étape d'estimation d'un réglage de lumière inconnu dans la scène, par les étapes suivantes :
∘ obtenir des deuxièmes informations d'image de la scène avec le réglage de lumière inconnu, et
∘ estimer le réglage de lumière inconnu en comparant les deuxièmes informations d'image avec au moins une apparence adaptée de la carte adaptable en éclairage.

2. Procédé selon la revendication 1, dans lequel
la carte estimée obtenue à partir des premières informations d'image comprend un modèle de surface tridimensionnel représentant la géométrie de la scène.

3. Procédé selon l'une quelconque des revendications 1 et 2, dans lequel l'étape d'estimation des contributions de radiance comprend une étape de lancer de rayons dans la scène sur la base de la carte estimée obtenue à partir des premières informations d'image.

4. Procédé selon l'une quelconque des revendications précédentes, dans lequel l'état d'une source lumineuse est représenté par des variables indiquant la luminosité et/ou la chromaticité et/ou la teinte d'une source lumineuse.

5. Procédé selon l'une quelconque des revendications précédentes, dans lequel l'estimation du réglage de lumière inconnu comprend les étapes suivantes :
i. simuler des informations d'image de radiance pour des réglages de lumière possibles sur la base de la carte adaptable en éclairage,
ii. obtenir des informations d'image de radiance réelles sur la base des deuxièmes informations d'image,
iii. déterminer une métrique prédéfinie en comparant les informations d'image de radiance réelles et les informations d'image de radiance simulées pour les réglages de lumière possibles,
iv. sélectionner le réglage de lumière qui minimise la métrique prédéfinie déterminée à l'étape iii.

6. Procédé selon l'une quelconque des revendications précédentes, dans lequel l'estimation du réglage de lumière inconnu est basée sur la réception d'informations concernant l'état d'au moins une source lumineuse via une interface de communication qui transmet lesdites informations de statut.

7. Procédé mis en œuvre par ordinateur pour un suivi de pose de caméra, comprenant :
• les étapes de l'une quelconque des revendications précédentes, et
• une étape de suivi d'une pose de caméra dans la scène en intérieur en fonction du réglage de lumière estimé.

8. Procédé selon la revendication précédente, dans lequel l'étape de suivi de la pose de caméra comprend :
• la simulation d'informations d'image sur la base du réglage de lumière estimé,
• l'obtention d'informations d'image réelles sur la base des deuxièmes informations d'image,
• la détermination d'une erreur prédéfinie entre les informations d'image simulées et les informations d'image réelles,
• l'estimation de la pose de caméra en minimisant l'erreur.

9. Procédé selon l'une quelconque des revendications précédentes, dans lequel le réglage de lumière inconnu et/ou le suivi de la pose de caméra sont estimés en temps réel ou en temps quasi réel.

10. Procédé mis en œuvre par ordinateur destiné à la réalité augmentée, comprenant :
• les étapes de l'une quelconque des revendications précédentes, et
• une étape d'augmentation de la scène en intérieur avec des entités artificielles selon un procédé prédéfini et en fonction du réglage de lumière estimé.

11. Procédé mis en œuvre par ordinateur pour la reconnaissance d'objets, comprenant :
• les étapes de l'une quelconque des revendications précédentes, et
• une étape de reconnaissance d'un objet dans la scène en intérieur selon un procédé prédéfini et en fonction du réglage de lumière estimé.

12. Système, comprenant une unité de commande configurée pour mettre en œuvre un procédé selon l'une quelconque des revendications de procédé précédentes.

13. Programme informatique comprenant des instructions pour exécuter les étapes d'un procédé selon l'une quelconque des revendications de procédé précédentes lorsque ledit programme est exécuté par un ordinateur.

14. Support d'enregistrement lisible par un ordinateur sur lequel est enregistré un programme informatique comportant des instructions pour exécuter les étapes d'un procédé selon l'une quelconque des revendications de procédé précédentes.
